# EUROPÄISCHE PATENTSCHRIFT

(11) **EP 0 319 671 B1**
(45) Veröffentlichungstag und Bekanntmachung des Hinweises auf die Patenterteilung: **20.01.1993**
(21) Anmeldenummer: 88116910.6
(22) Anmeldetag: 12.10.1988
(51) Int. Cl.: H04N 3/20

(54) **Schaltung zum Schutz der Bildröhre**
Circuit for picture tube protection
Circuit pour la protection du tube image

(30) Priorität: 10.12.1987 DE 3741845
(43) Veröffentlichungstag der Anmeldung: 14.06.1989
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Jantschek, Gesa c/o GRUNDIG E.M.V. Max Grundig, D-8510 Fürth/Bay (DE); Kämpf, Hans c/o GRUNDIG E.M.V. Max Grundig, D-8510 Fürth/Bay (DE)

(56) Entgegenhaltungen:
- EP-A- 0 054 452
- US-A- 4 042 859

## Beschreibung

Die Erfindung betrifft eine Schaltung zum Schutz der Bildröhre mit den im Oberbegriff des Anspruchs 1 angegebenen Merkmalen.

Tritt bei einer derartigen Schaltung ein Kurzschluß des Auskoppelkondensators der Vertikalablenkschaltung auf, so fließt durch die Vertikalablenkspulen und damit im Ablenkjoch des Fernsehempfängers ein unerwünscht hoher Gleichstrom. Durch diesen wird der Elektronenstrahl unerwünscht weit abgelenkt, trifft auf den Bildröhrenhals und zerstört diesen.

Der vorgenannte Fall kann beispielsweise auftreten bei der VDE-Prüfung von Fernsehempfängern und Monitoren. Bei dieser VDE-Prüfung wird zu Prüfzwecken u.a. der Auskoppelkondensator kurzzeitig kurzgeschlossen. Wird dieser Kurzschluß versehentlich zu lange aufrechterhalten, kann es zur oben beschriebenen Zerstörung der Bildröhre kommen.

Der vorgenannte Fall kann ferner auftreten im praktischen Betrieb des Fernsehempfängers oder Monitors, beispielsweise aufgrund von Bauteildefekten.

Aus der EP-A-0054452 ist bereits eine Vorrichtung zum Schutz eines Fernsehempfängers bekannt, die unter anderem bei einer zu hohen Spannung am Auskoppelkondensator der Vertikalablenkschaltung dann anspricht, wenn der zu der zu hohen Spannung führende Gerätefehler eine bestimmte Zeit andauert.

Die Aufgabe der Erfindung besteht darin, eine Schaltung anzugeben, bei der auch dann, wenn im Ablenkjoch des Fernsehempfängers oder Monitors ein unerwünscht hoher Gleichstrom fließt, eine Zerstörung der Bildröhre vermieden wird.

Diese Aufgabe wird durch die im Anspruch 1 angegebenen Merkmale gelöst. Vorteilhafte Ausgestaltungen der Erfindung sind in den Unteransprüchen beschrieben.

Die Vorteile der Erfindung ergeben sich aus einem Ausführungsbeispiel, welches im folgenden anhand der (einzigen) Figur näher erläutert wird.

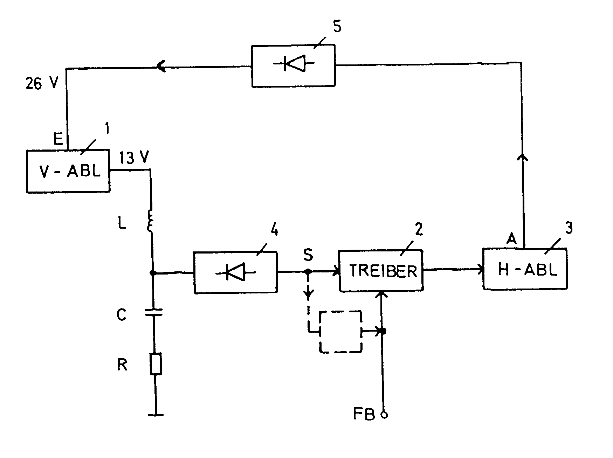

Die Figur zeigt die Vertikalablenkschaltung 1 eines Fernsehempfängers. Zwischen dem Ausgang der Vertikalablenkschaltung 1 und Masse ist eine Reihenschaltung, bestehend aus der (den) Vertikalablenkspule(n) L, dem Auskoppelkondensator C und einem Widerstand R, angeordnet. Die in der Figur gezeigte Schaltung enthält ferner einen Treiber 2 für die Horizontalablenkschaltung 3 des Fernsehempfängers. Bei der Treiberschaltung kann es sich beispielsweise um den TDA 8140 der Firma SGS handeln (siehe DATA BOOK: "TV AND MONITOR PRODUCTS", 1st EDITION, MAY 1986, S. 503-511). Diese Treiberschaltung besitzt Anschlüsse, über die bei Anlegen eines geeigneten Spannungspegels die Horizontalablenkschaltung 3 deaktiviert und der Fernsehempfänger in den Bereitschaftsbetrieb übergeführt werden kann. Dieser Bereitschaftsbetrieb wird beispielsweise ausgelöst durch ein Fernbediensignal FB (siehe beispielsweise Grundig SERVICE MANUAL CUC 3600/3800).

In der Horizontalablenkschaltung 3 wird im Normalbetrieb bzw. im eingeschalteten Zustand des Fernsehempfängers neben der Horizontalablenkspannung auch die Betriebsspannung für die Vertikalablenkschaltung erzeugt. Diese steht am Ausgang A der Horizontalablenkschaltung 3 in Form einer Impulsspannung zur Verfügung, wird in einem Gleichrichter 5 in eine Gleichspannung von beispielsweise 26 V umgewandelt und dem Betriebsspannungseingang E der Vertikalablenkschaltung 1 zugeführt.

Im Normalbetrieb liegt am Ausgang der Vertikalablenkschaltung eine Spannung an, die aus einem Gleichspannungsanteil und einem Wechselspannunsanteil besteht. Der Gleichspannungsanteil beträgt beispielsweise ca. 13 V und ist durch den Auskoppelkondensator C gleichspannungsmäßig von Masse getrennt.

Ferner ist zwischen dem massefernen Ende des Auskoppelkondensators C und der Horizontaltreiberschaltung 2 eine Schaltung 4 angeordnet, die den Fernsehempfänger im Falle eines Kurzschlusses des Auskoppelkondensators C in den Bereitschaftsbetrieb überführt.

Diese Schaltung 4 besteht im gezeigten Ausführungsbeispiel aus einer Diode, deren Kathode mit dem massefernen Ende des Auskoppelkondensators C und deren Anode mit der Horizontaltreiberschaltung 2 verbunden ist.

Bei nicht kurzgeschlossenem Auskoppelkondensator C liegt an der Kathode der Diode 4 ein Gleichspannungswert von ca. 13 V an, so daß die Diode 4 gesperrt ist.

Bei kurzgeschlossenem Auskoppelkondensator C ist die Kathode der Diode 4 über den Widerstand R und den kurzgeschlossenen Auskoppelkondensator C nahezu mit Masse verbunden. Dadurch wird die Diode 4 leitend. Dieses Leiten der Diode führt an ihrer Anode zu einem geänderten Spannungspegel, welcher entweder direkt oder gegebenenfalls nach Umwandling in eine geeignete Signalform als Steuersignal S der Treiberschaltung 2 zugeführt wird.

Diese setzt in Ansprache auf das Steuersignal S die Horizontalablenkschaltung 3 außer Betrieb und führt den Fernsehempfänger in den Bereitschaftsbetrieb über.

Dadurch wird in vorteilhafter Weise gleichzeitig die Betriebsspannung für die Vertikalablenkung 1 abgeschaltet. Diese Maßnahme stellt eine zusätzliche Sicherheit vor einer Zerstörung der Bildröhre dar.

## Patentansprüche

1. Schaltung zum Schutz der Bildröhre eines Fernsehempfängers bzw. Monitors, mit
- einer Vertikalablenkschaltung,
- einer zwischen dem Ausgang der Vertikalablenkschaltung und Masse angeordneten Reihenschaltung, bestehend aus den Vertikalablenkspulen, einem Auskoppelkondensator und einem Widerstand, und
- einer Betriebsschaltung, die den Fernsehempfänger bzw. Monitor von einem eingeschalteten Zustand in einen Bereitschaftsbetrieb überführt,
**dadurch gekennzeichnet,** daß
- zwischen dem massefernen Ende des Auskoppelkondensators (C) und der Betriebsschaltung (2, 3), die den Fernsehempfänger bzw. Monitor vom eingeschalteten Zustand in den Bereitschaftsbetrieb bringt, Schaltmittel (4) vorgesehen sind, die bei einem Kurzschluß des Auskoppelkondensators (C) der Betriebsschaltung (2, 3) ein Steuersignal (S) zuführen, und
- die Betriebsschaltung (2, 3) in Ansprache auf das Steuersignal (S) den Fernsehempfänger bzw. Monitor vom eingeschalteten in den Bereitschaftsbetrieb bringt.

2. Schaltung nach Anspruch 1, **dadurch gekennzeichnet,** daß als Betriebsschaltung (2, 3) der Horizontaltreiber (2) und die Horizontalablenkschaltung (3) verwendet werden.

3. Schaltung nach Anspruch 2, **dadurch gekennzeichnet,** daß die Versorgungsspannung für die Vertikalablenkschaltung (1) im eingeschalteten Zustand des Fernsehempfängers bzw. Monitors in der Horizontalablenkschaltung (3) erzeugt und beim Kurzschluß des Auskoppelkondensators (C) in Ansprache auf das Steuersignal (S) abgeschaltet wird.

4. Schaltung nach einem der vorhergehenden Ansprüche, **dadurch gekennzeichnet,** daß die Schaltmittel (4) aus einer Diode bestehen, deren Kathode mit dem massefernen Ende des Auskoppelkondenstors (C) und deren Anode mit der Betriebsschaltung (2, 3) verbunden ist.

## Claims

1. Circuit for protecting the picture tube of a television receiver or monitor, comprising
- a vertical deflection circuit,
- a series circuit arranged between the output of the vertical deflection circuit and earth, consisting of the vertical deflection coils, an output capacitor and a resistor, and
- an operating circuit which switches the television receiver or monitor from a switched-on state to a standby mode,
characterised in that
- between the end of the output capacitor (C) remote from earth and the operating circuit (2, 3) which brings the television receiver or monitor from the switched-on state into the standby mode, switching means (4) are provided which in the event of a short circuit of the output capacitor (C) supply a control signal (S) to the operating circuit (2, 3), and
- the operating circuit (2, 3), in response to the control signal (S), brings the television receiver or monitor from the switched-on state into the standby mode.

2. Circuit according to Claim 1, characterised in that the horizontal driver (2) and the horizontal deflection circuit (3) are used as operating circuit (2, 3).

3. Circuit according to Claim 2, characterised in that the supply voltage for the vertical deflection circuit (1) is generated in the horizontal deflection circuit (3) in the switched-on state of the television receiver or monitor and is disconnected in response to the control signal (S) in the event of a short circuit of the output capacitor (C).

4. Circuit according to one of the preceding claims, characterised in that the switching means (4) consist of a diode, the cathode of which is connected to the end of the output capacitor (C) remote from earth and the anode of which is connected to the operating circuit (2, 3).

## Revendications

1. Circuit de protection du tube image d'un récepteur ou d'un moniteur de télévision, ayant
- un circuit de déviation verticale,
- un circuit en série, disposé entre la sortie du circuit de déviation verticale et la masse, consistant en les bobines de déviation verticale, un condensateur de découplage et une résistance, et
- un circuit de fonctionnement qui amène le récepteur ou le moniteur de télévision d'une position de fonctionnement à une position d'attente.
caractérisé en ce que
- entre la borne éloignée de la masse du condensateur de découplage (C) et le circuit de fonctionnement (2) qui amène le récepteur ou le moniteur de télévision de la position de fonctionnement à la position d'attente, on prévoit des moyens de commutation (4) qui, en cas de court-circuit du condensateur de découplage (C) du circuit de fonctionnement (2, 3), envoient un signal de commande (S), et
- le circuit de fonctionnement (2, 3), en réponse au signal de commande (S), amène le récepteur ou le moniteur de télévision de la position de fonctionnement à la position d'attente.

2. Circuit selon la revendication 1, caractérisé en ce que comme circuit de fonctionnement (2, 3) on utilise le dispositif de commande du circuit de déviation horizontale (2) et le circuit de déviation horizontale (3).

3. Circuit selon la revendication 2, caractérisé en ce que la tension d'alimentation du circuit de déviation verticale (1) est créée dans le circuit de déviation horizontale (3) en position de fonctionnement du récepteur ou du moniteur de télévision, et qu'en cas de court-circuit du condensateur de découplage (C), elle est supprimée en réponse au signal de commande (S).

4. Circuit selon une quelconque des revendications précédentes, caractérisé en ce que les moyens de commutation (4) consistent en une diode dont la cathode est reliée à la borne éloignée de la masse du condensateur de découplage (C) et dont l'anode est reliée au circuit de fonctionnement (2, 3).
